# EUROPÄISCHE PATENTSCHRIFT

(11) **EP 3 411 274 B1**
(45) Veröffentlichungstag und Bekanntmachung des Hinweises auf die Patenterteilung: **28.07.2021**
(21) Anmeldenummer: 17700525.3
(22) Anmeldetag: 16.01.2017
(51) Int. Cl.: B60T 13/66

(54) **VERFAHREN ZUM BETREIBEN EINES FAHRZEUG-BREMSSYSTEMS**
METHOD FOR OPERATING A VEHICLE BRAKE SYSTEM
PROCÉDÉ PERMETTANT DE FAIRE FONCTIONNER UN SYSTÈME DE FREINAGE DE VÉHICULE

(30) Priorität: 26.01.2016 DE 102016201083; 26.01.2016 DE 102016201085
(43) Veröffentlichungstag der Anmeldung: 12.12.2018
(73) Patentinhaber: Bayerische Motoren Werke Aktiengesellschaft, 80809 München (DE)
(72) Erfinder: EICHNER, Georg, 85737 Ismaning (DE); ALLERT, Baldur, 85716 Unterschleißheim (DE); MAYOR, Marco, 80337 München (DE)
(86) Internationale Anmeldenummer: PCT/EP2017/050759
(87) Internationale Veröffentlichungsnummer: WO 2017/129430

(56) Entgegenhaltungen:
- EP-A1- 1 095 833
- DE-A1-102005 011 415
- DE-A1-102006 060 759
- DE-A1-102008 034 769
- DE-A1-102015 206 918
- US-A1- 2013 073 164

## Beschreibung

Die Erfindung betrifft ein Verfahren zum Betreiben eines Fahrzeug-Bremssystems. Ferner betrifft die Erfindung eine Vorrichtung zur Durchführung und eine Verwendung des genannten Verfahrens. Zum Stand der Technik wird beispielshalber auf die DE 10 2013 211 856 A1, die DE 38 39 957 A1 und insbesondere auf die EP 1 369 326 B1 verwiesen.

Allgemein ist es bekannt, dass Fahrzeug-Bremssysteme aufgrund von bestimmten Fahr- und Umweltsituationen Geräusche verursachen. Derartige Geräusche sind gegebenenfalls von den Fahrzeuginsassen, als auch von Außenstehenden als störend und unangenehm wahrnehmbar.

So beschreibt die oben genannte DE 10 2013 211 856 A1 ein Verfahren zum Verhindern von Bremsgeräuschen, insbesondere Bremsenquietschen. Um einen das Geräusch verursachenden Bremsdruckbereich zu vermeiden, wird das Fahrzeug automatisch gezielt abgebremst.

Außerdem ist es aus der oben genannten EP 1 369 326 B1 bekannt, einen bestimmten Zustand zu erfassen und abhängig von diesem Zustand einen vom Fahrer nicht bemerkbaren Bremsvorgang automatisch einzuleiten. Genauer wird dabei eine Salzwasserfilm-Schichtdicke an den Bremsscheiben erfasst und in Abhängigkeit dieser ein vom Fahrer praktisch nicht wahrnehmbarer Bremsvorgang zur Reinigung der Bremsscheiben eingeleitet.

In der DE 10 2015 206918 A1 ist ein Verfahren zum Betrieb eines elektromechanischen Fahrzeugbremssystems aufgezeigt, wobei bereits im Vorfeld eines möglichen Bremsvorgangs ein temporärer Vordruck, ohne unmittelbare Auswirkung, in wenigstens einem Teil des Fahrzeugbremssystems aufgebaut wird.

Zwischen den sogenannten Bremsbelägen und einer Halterung der Bremsbeläge bzw. einem Schacht in einem Bremssattel, in welchem die Bremsbeläge gehalten werden, herrscht tangential zur Bremsscheibe ein ausgeprägtes Spiel, welches den Bremsbelägen einen gewissen Freiheitsgrad auch in Vertikalrichtung bzgl. des Fahrzeugs einräumt, jedenfalls dann, wenn wie üblich sich der Bremssattel bezogen auf eine Uhr in der Umgebung der Dreiuhrstellung bzw. Neunuhrstellung befindet. Hinzu kommt außerdem ein in Radialrichtung der Bremsscheibe ausgeprägtes Spiel zwischen einer Bremsbelagrückenplatte und einer oberen und unteren Anlegestützen der Bremsbeläge im Bremssattel. Die beiden genannten Spiele werden auch als Schachtspiel bezeichnet. Außerdem wird dieses bereits bestehende Schachtspiel oftmals durch Werkzeugtoleranzen oder Werkzeugverschleiss bei der Herstellung der Bremsbeläge erweitert. Das Schachtspiel ist insbesondere deswegen notwendig, da es Restbremsmomente gering hält und somit ein reibungsloseres Lösen der Bremsbeläge von der Bremsscheibe nach einem durchgeführten Bremsvorgangs gewährleistet.

Fährt ein Fahrzeug nun eine Zeitlang mit einer Vorwärtsbewegung, ohne dass ein Bremsvorgang stattfindet, so bewegen sich die Bremsbeläge innerhalb dieses Spiels nach oben und liegen mit ihrem oberen Ende an der Halterung bzw. an den Anlegestützen im Bremssattel an. Das Spiel befindet sich dann zwischen dem unterem Ende der Bremsbeläge und dem unteren Teil der Halterung bzw. der vertikal betrachtet unteren Anlegestütze des Bremssattels. Wird dann ein Fahrtrichtungswechsel, also in diesem Fall ein Wechsel zwischen Vorwärts- und Rückwärtsfahrt eingeleitet, womit sich die Raddrehrichtung ändert, und leitet daraufhin der Fahrer erstmalig einen Bremsvorgang ein, so werden die Bremsbeläge, abhängig von der Betätigungsgeschwindigkeit und von der Höhe des Bremsdruckes, derart stark beschleunigt, dass sie innerhalb des Schachtspieles nach unten an den unteren Teil der Halterung bzw. an die untere Anlegestütze im Bremssattel rutschen. Das Spiel befindet sich dann zwischen dem oberen Ende der Bremsbeläge und dem oberen Teil der Halterung bzw. der vertikal betrachtet oberen Anlegestütze des Bremssattels. Dieser Vorgang kann je nach Höhe des eingeleiteten Bremsdrucks ein lautes, klackendes Geräusch verursachen, das sogenannte Reversierklacken. Bei einer erstmaligen Bremsbetätigung nach dem Wechsel zwischen Rückwärts- zu Vorwärtsfahrt entsteht ebenso nach dem oben erläutertem Prinzip ein Klack-Geräusch, welches als Reversierklacken bezeichnet wird.

Überfährt das Fahrzeug eine unebene Fahrbahnoberfläche, wie beispielsweise ein Kopfsteinpflaster oder Schlaglöcher, so kann es des Weiteren zu einem für den Fahrer als unangenehm empfundenen Geräusch, insbesondere einem Klappergeräusch kommen. Dabei werden bei der Überfahrt des Fahrzeuges über unebene Fahrbahnoberflächen die Bremsbeläge innerhalb des tangentialen und/oder radialen Schachtspiels zwischen den oberen und unteren Abstützungen im Bremssattel beschleunigt. Diese Beschleunigung der Bremsbeläge innerhalb des Schachtspieles führt während der Überfahrt über die unebene Fahrbahn zu einem dauerhaften Anschlagen der Bremsbeläge an dem oberen oder unteren Teil der Halterung der Bremsbeläge im Bremssattel bzw. an den oberen oder unteren Anlegestütze der Bremsbeläge im Bremssattel. Das besagte Anschlagen der Bremsbeläge innerhalb des Schachtspiels an den Anlegestützen der Bremsbeläge im Bremssattel bewirkt ein für den Fahrer als störend wahrnehmbares Klappergeräusch. Zur Vermeidung der genannten Klappergeräusche kommen in der Regel bestimmte Federn, wie beispielsweise Gehäusehaltefedern oder Spreizfedern zum Einsatz, welche das Klappergeräusch bis zu einer definierten Höhe der Beschleunigung vermeiden. Jedoch kann die sich ergebene Beschleunigung der Bremsbeläge bei einer Fahrt auf einer unebenen Fahrbahn, wie beispielsweise auf Kopfsteinpflaster oder auf Schlaglöchern diese definierte Höhe der Beschleunigung übertreffen und es kommt trotzdem zu unerwünschten Klappergeräuschen.

Aufgabe der Erfindung ist aufzuzeigen, wie die vorstehende Geräuschproblematik vermieden werden kann.

Die Lösung dieser Aufgabe ergibt sich mit den Merkmalen des Anspruchs 1. Neben dem beanspruchtem Verfahren zur Vermeidung des genannten Reversierklackens und/oder des Klappergeräuschs bei Überfahrt auf unebenen Fahrbahnen wird ferner eine Vorrichtung zur Durchführung und eine Verwendung des genannten Verfahrens beansprucht.

Das Verfahren zum Vermeiden des Reversierklackens bzw. des Klappergeräusches bei Überfahrt auf unebenen Fahrbahnen wird an einer im Wesentlichen üblichen Fahrzeug-Bremsanlage durchgeführt, welche mindestens einen Bremsbelag und eine Bremsscheibe als Reibpartner aufweist, wobei eine elektronische Steuereinheit einen Zustand am Fahrzeug oder in dessen Umgebung erfasst und zustandsabhängig einen derartigen Verzögerungsvorgang veranlasst, dass eine im Wesentlichen nicht vom Fahrer wahrnehmbare Fahrzeugverzögerung eintritt. Erfindungsgemäß wird dabei ein Wechsel zwischen Vorwärts- und Rückwärtsfahrt oder umgekehrt, ein Wechsel zwischen Rückwärts- und Vorwärtsfahrt des Fahrzeuges erfasst. Bevorzugt wird außerdem eine Vertikalbewegung und/oder eine zukünftige Vertikalbewegung des Fahrzeugrades bzw. des Fahrzeugaufbaus erfasst. Die Erfassung zwischen Vorwärts- und Rückwärtsfahrt (und umgekehrt) kann durch geeignete Messtechnik bzw. Sensorik am Fahrzeug, vorzugsweise durch die Änderung der Gangeinstellung und/oder durch ABS-Sensoren (Antiblockiersystem) und/oder Raddrehzahlsensoren erfolgen.

Nach dem Erfassen eines Wechsels zwischen Vorwärts- und Rückwärtsfahrt wird ein vom Fahrzeugführer und von den Fahrzeuginsassen im Wesentlichen nicht wahrzunehmender Verzögerungsvorgang von der elektronischen Steuereinheit eingeleitet. Der dabei entstehenden Bremsdruck führt nur zu einer minimalen Fahrzeugverzögerung und bewirkt insbesondere ein definiertes und langsames Anlegen der Bremsbeläge an den jeweiligen oberen- oder unteren Teil der Halterung bzw. an den oberen und unteren Anlegestützen im Bremssattel innerhalb des Schachtspiels, und zwar ohne hörbare Geräuschentwicklung. Ein lautes Schlaggeräusch nach erstmaliger Durchführung eines Verzögerungsvorgangs nach dem Wechsel zwischen Vorwärts- und Rückwärtsfahrt (oder umgekehrt) wird dadurch vermieden.

Die bevorzugte Erfassung einer Vertikalbewegung des Fahrzeugrads und/oder des Fahrzeugaufbaus kann eine genannte Vertikalbewegung mittels eines Höhenstandsensors am Fahrzeug oder mittels eines Beschleunigungssensors wie beispielsweise eines Sensors zur Erfassung von Vibrationen an der Fahrzeugkarosserie oder mittels eines Mikrophons erkannt werden.

Die bevorzugte Erfassung einer Quelle einer zukünftig möglichen Vertikalbewegung des Fahrzeugrads und/oder des Fahrzeugaufbaus kann durch geeignete Messtechnik bzw. Sensorik am Fahrzeug erfolgen. Eine Quelle wird in diesem Sinne als ein Auslöser für das Auftreten eines Klappergeräusches verstanden, was beispielsweise ein Schlagloch oder eine Fahrbahn mit Kopfsteinpflaster sein kann.

In einer vorteilhaften Ausführung der Erfindung kann eine genannte Quelle einer zukünftig möglichen Vertikalbewegung des Fahrzeugrads und/oder des Fahrzeugaufbaus über mindestens eine Kamera zur Überwachung der Fahrbahn und der Umgebung erfasst werden. Hierbei kann beispielsweise eine Fahrzeugaußenkamera ein bevorstehendes Schlagloch auf der Fahrbahn erfassen, diese Information mittels eines Signals an die elektronische Steuereinheit weiterleiten, welche daraufhin ein vom Fahrer im Wesentlichen nicht wahrnehmbaren leichten Bremsvorgang einleitet. Somit kann die Einleitung dem vom Fahrer im Wesentlichen nicht wahrnehmbaren leichten Bremsvorgang bereits präventiv eingesteuert werden und eine zukünftige Situation mit Klapperräuschen vermieden werden.

Nach dem Erfassen einer Vertikalbewegung und/oder einer zukünftig möglichen Vertikalbewegung des Bremsbelags und/oder des Reibpartners wird bevorzugt ein vom Fahrzeugführer und von den Fahrzeuginsassen im Wesentlichen nicht wahrzunehmender leichter Bremsvorgang von der elektronischen Steuereinheit eingeleitet. Der dabei entstehende Bremsdruck führt nur zu einer minimalen Fahrzeugverzögerung und bewirkt ein Festdrücken bzw. ein Halten der Bremsbeläge in ihrer jeweiligen Position ohne hörbare Geräuschentwicklung. Ein störendes Klappergeräusch bei Überfahrt des Fahrzeuges über unebene Fahrbahnen wird dadurch vermieden.

Der Bremsdruck des automatisch eingeleiteten Verzögerungsvorgangs, welcher von der elektronischen Steuereinheit eingeleitet wird, ist dabei derart eingestellt, dass er vom Fahrzeugführer und von Fahrzeuginsassen im Wesentlichen nicht wahrnehmbar ist. Als nicht wahrnehmbar gelten Bremsdruckbereiche, welche nur minimal größer als der Anlegedruck der Bremsbeläge an die Bremsscheiben sind, welcher bei ca. 1-2 Bar liegt. Dieser nicht wahrnehmbare Bremsdruckbereich befindet sich in der Regel bei einem herkömmlichen Personenkraftwagen bei ca. 3-5 bar, kann jedoch je nach Fahrzeugklasse auch niedriger oder wie zum Beispiel bei einem Lastkraftwagen mit einem höheren Fahrzeuggewicht auch höher liegen. Vorzugsweise wird der von der elektronischen Steuereinheit eingeleitete Bremsdruck auf einen geeigneten maximalen Bremsdruck voreingestellt. Das Einleiten des Verzögerungsvorgangs kann anschließend entweder gemäß einer Sprungfunktion durch Anlegen des voreingestellten Bremsdrucks erfolgen und/oder auch durch ein zeit-, weg- oder geschwindigkeitsabhängiges Kennfeld aufbauend bis zur Erreichung des maximalen Bremsdrucks erfolgen. Ebenso kann wie das Einleiten des leichten Bremsvorgangs auch das Beenden des leichten Bremsvorgangs entweder gemäß einer Sprungfunktion durch Abbauen des voreingestellten Bremsdrucks erfolgen und/oder auch durch ein zeit-, weg- oder geschwindigkeitsabhängiges Kennfeld abgebaut werden, bis kein Bremsdruck mehr eingeleitet wird.

Vorzugsweise geschieht der automatisch eingeleitete Verzögerungsvorgang zeitnah nach einem erfassten Wechsel zwischen Vorder- und Rückwärtsfahrt (oder umgekehrt) und bevor ein erster Bremseingriff nach dem Wechsel zwischen Vorwärts- und Rückwärtsfahrt durchgeführt wurde. Damit kann sichergestellt werden, dass keine Geräuschentwicklung auch bei schnellem Wechsel zwischen Vorwärts- und Rückwärtsfahrt zum Beispiel beim Rangieren in einem Ein- oder Ausparkvorgang stattfindet.

Ebenfalls vorzugsweise erfolgt der automatisch eingeleitete leichte Bremsvorgang bereits bei der Erfassung einer zukünftig möglichen Vertikalbewegung des Bremsbelags und/oder des Reibpartners. Alternativ kann der automatisch eingeleitete leichte Bremsvorgang direkt im Anschluss oder sogar während der Erfassung einer Vertikalbewegung und/oder des Reibpartners erfolgen. Damit kann sichergestellt werden, dass keine oder keine weitere Geräuschentwicklung bei der Überfahrt des Fahrzeuges auf unebenen Fahrbahnen erfolgt.

Im Sinne einer vorteilhaften Weiterbildung kann der für den Fahrer im Wesentlichen nicht wahrnehmbare eingeleitete Bremsdruckaufbau geschwindigkeitsgesteuert sein. So kann beispielsweise der automatisch eingeleitete Bremsdruck bei einem höheren Geschwindigkeitsbereich ab beispielsweise 60 km/h nicht mehr eingeleitet werden, da das Reversierklacken aufgrund übertönender, anderer Fahrzeug- und/oder Umgebungsgeräusche auch ohne automatisch eingeleiteten Verzögerungsvorgang nicht mehr vom Fahrer hörbar ist.

Weiterhin kann der Bremsdruck des automatisch eingeleiteten Verzögerungsvorgangs auch zeitgesteuert sein. So gewährleistet der automatisch eingeleitete Verzögerungsvorgang beispielsweise bei einem schnellen Wechsel zwischen Vorwärts- und Rückwärtsfahrt (und umgekehrt) wie beim Ein- oder Ausparkvorgang, durch eine zeitlich begrenzte Durchführung des Verzögerungsvorgangs das langsame Anlegen der Bremsbeläge in der jeweiligen Gegenrichtung der Halterung im Bremssattel immer noch.

Außerdem kann beispielsweise nach dem Erfassen einer zukünftig möglichen Vertikalbewegung des Bremsbelags und/oder des Reibpartners eine bestimmte Zeit vorgegeben werden, in welcher der Bremsdruck eingeleitet wird. Zudem kann bei einer sehr langen Überfahrt über unebene Fahrbahnen zur Vermeidung eines zu hohen Kraftstoffverbrauchs die Dauer des eingeleiteten leichten Bremsvorgangs begrenzt werden.

Des Weiteren kann der automatisch eingeleitete Bremsdruck weggesteuert sein. So kann beispielsweise der Bremsdruck des automatisch eingeleiteten Verzögerungsvorgangs nach oder vor einer bestimmten zurückgelegten Strecke des Fahrzeuges (beispielsweise nach einem Wechsel zwischen Vorwärts- und Rückwärtsfahrt) eingeleitet werden.

Die Erfindung kann eine elektrohydraulische Scheibenbremse betreffen, bei welcher die automatisch eingeleitete Verzögerung vom Fahrer in Form einer Rückmeldung am Bremspedal durch eine Entkoppelung des Bremspedals von einer hydraulischen Stelleinheit an der Fahrzeugbremse im Wesentlichen nicht wahrnehmbar ist.

Die Erfindung kann jedoch auch an einer konventionelle hydraulische Scheibenbremse umgesetzt sein, bei welcher der Fahrer durch eine Koppelung zwischen dem Bremspedal mit einer hydraulischen Stelleinheit eine Rückmeldung in Form einer höheren Härte des Pedaldrucks bei einem automatisch eingeleiteten Bremsdruck wahrnehmen würde. Um diese genannte Rückmeldung am Bremspedal beim Einleiten eines automatischen Bremsdrucks zu vermeiden, kann es vorgesehen sein, dass beim Lösen des Bremspedals vom Fahrer der bestehende und vom Fahrer zuvor eingeleitete Bremsdruck zur Durchführung eines Wechsels zwischen Vorwärts- und Rückwärtsfahrt (oder umgekehrt) nicht vollständig abgebaut wird. Dabei wird der zur Vermeidung von Reversierklacken notwendige Bremsdruck nicht mehr extra eingeleitet, sondern der bereits bestehende Bremsdruck welcher vom Fahrer zuvor selbst eingeleitet wurde beim Lösen des Bremspedals durch den Fahrer nur mehr auf einen niedrigen Wert reduziert. Für den Fahrzeugführer ist somit im Wesentlichen keine Verzögerung wahrnehmbar.

Die Vorrichtung zur Durchführung des erfindungsgemäßen Verfahrens umfasst vorzugsweise eine hydraulisch oder elektrohydraulisch betätigte Scheibenbremse an einem vorzugsweise zweispurigem Kraftfahrzeug, welche unter anderem eine Bremsscheibe, einen die Bremsscheibe umgreifenden Bremssattel, einen Bremsträger, mindestens einen Bremsbelag und mindestens einen vom elektronischen Steuergerät beeinflussbaren Bremskolben aufweist. Die elektronische Steuereinheit ist dabei in der Lage in Abhängigkeit der messtechnisch oder sensorisch erfassten Zustände, einen automatischen Verzögerungsvorgang einzuleiten.

Im Folgenden wird die Erfindung anhand eines Ausführungsbeispiels weiter erläutert.

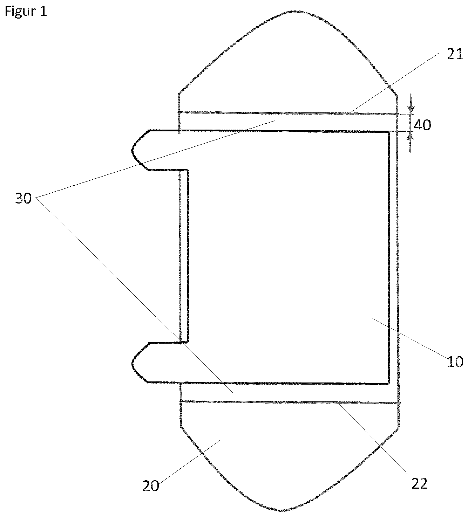

Dabei zeigt Figur 1 eine schematische Ansicht eines Bremsbelags innerhalb eines Bremssattels im Schnitt, welcher Bremssattel eine nicht dargestellte Bremsscheibe umgreift.

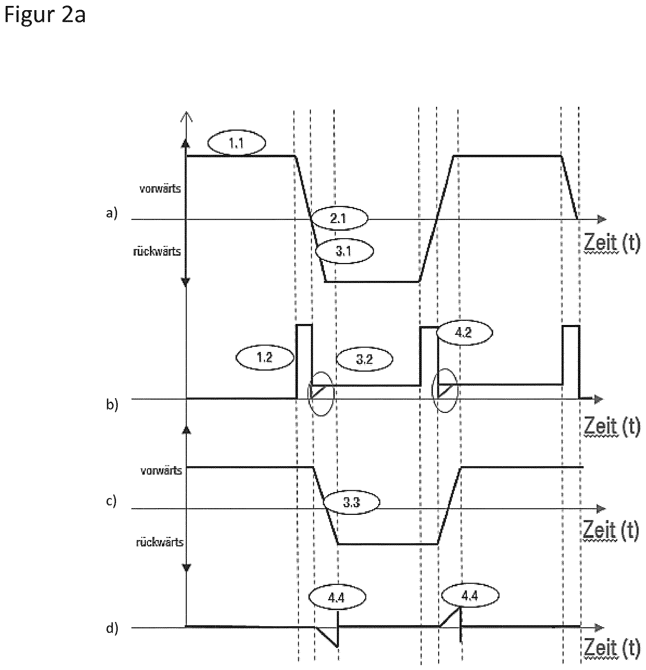

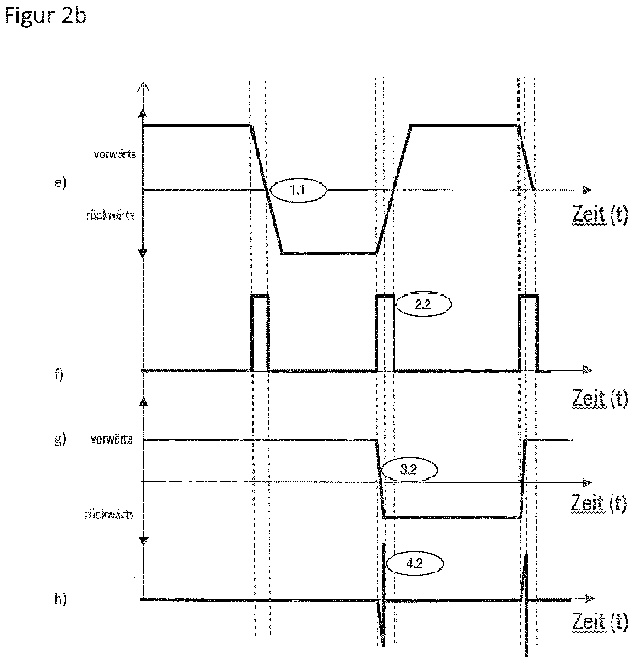

Figur 2 zeigt zeitliche Verläufe der Fahrzeuggeschwindigkeit, des Bremsdrucks, der Position des Bremsbelags und der Beschleunigung des Bremsbelags mit (Figur 2a) und ohne (Figur 2b) erfindungsgemäßer Maßnahme.

Die beigefügte **Figur 1** stellt eine schematische Ansicht eines Bremsbelags mit der Bezugsziffer 10 im Schenkel 20 eines Bremssattels dar. Die gewählte Ansicht zeigt eine Draufsicht auf den im Bremssattelschenkel 20 gehaltenem Bremsbelag 10, der mit seiner sichtbaren Fläche von einem hinter der Zeichenebene liegenden Kolben gegen eine vor der Zeichenebene (und somit dem Betrachter zugewandte) liegende Bremsscheibe, welche um eine zur Zeichenebene senkrechte Achse drehbar ist, gepresst werden kann. Dabei befindet sich der Bremssattel wie üblich gegenüber der Bremsscheibe in einer Dreiuhrstellung bzw. Neunuhrstellung.

Im Ausführungsbeispiel aus Figur 1 wird der Bremsbelag 10 von dem Bremssattelschenkel 20 in einem Schacht 30 zwischen einer oberen Anlegestütze 21 und einer unteren Anlegestütze 22 im Bremssattelschenkel 20 gehalten. Innerhalb dieser Halterung besteht ein in Vertikalrichtung sowohl der Zeichenebene als auch im Einbauzustand des Fahrzeugbremssattels 20 zu erkennendes Schachtspiel 40 (=Freiraum) zwischen den beiden Anlegestützen 21 und 22 und dem Bremsbelag 10.

Bei Fahrt des Fahrzeuges auf unebener Fahrbahn, beispielsweise über ein Kopfsteinpflaster, kann der Bremsbelag 10 innerhalb des genannten Schachtspiels 40 derart beschleunigt werden, dass der Bremsbelag 10 immer wiederkehrend gegen die obere und untere Anlegestütze 21 und 22 anstößt, wobei ein lautes Klappergeräusch entsteht. Durch die erfindungsgemäße Maßnahme, also einem in und/oder vor Auftreten einer potentiellen Klappersituation automatisch eingeleitetem Bremsdruck, wird der Bremsbelag 10 derart gegen die nicht abgebildete und sich vor der Zeichenebene befindliche Bremsscheibe gedrückt, dass eine Beschleunigung des Bremsbelages 10 und damit ein Klappergeräusch vermieden wird.

Innerhalb des genannten Schachtspiels 40 wandert der Bremsbelag 10 bei Anlegen an die rotierende Bremsscheibe ausgelöst durch deren Drehimpuls und somit abhängig von deren Drehrichtung entweder an die obere Anlegestütze 21 oder an die untere Anlegestütze 22. Dies erfolgt insbesondere bei einem Bremseingriff nach einem Fahrtrichtungswechsel zwischen Vorwärts- und Rückwärtsfahrt (bzw. umgekehrt) des Fahrzeugs und bewirkt dabei ein Anschlagsgeräusch, welches als das bereits genannte Reversierklacken bezeichnet wird.

Die beigefügte **Figur 2** stellt Diagramme dar, in welchem der erfindungsgemäße, automatisch eingeleitete Bremsdruck nach einem Wechsel zwischen Vorwärts- und Rückwärtsfahrt beispielhaft aufgezeigt wird.

Dabei ist in Figur 2a in Diagramm a) die Fahrzeuggeschwindigkeit in Abhängigkeit der Zeit, in Diagramm b) der Bremsdruck in Abhängigkeit der Zeit, in Diagramm c) die Belagsposition in Abhängigkeit von der Zeit und in Diagramm d) die Beschleunigung des Bremsbelags in Abhängigkeit der Zeit aufgezeigt. Im Folgenden wird eine beispielhafte Situation zur Einleitung eines automatischen Bremsdrucks nach einem Wechsel zwischen Vorwärts- und Rückwärtsfahrt anhand der benannten Diagramme aufgezeigt. Dabei beschreiben die eingekreisten Bezugsziffern jeweils einen in der folgenden Beschreibung erläuterten Vorgang.

Dabei wird vor dem Einleiten der erfindungsgemäßen Maßnahme nach einer Fahrt mit einer konstanten Geschwindigkeit 1.1 in diesem dargestelltem Beispiel ein Wechsel zwischen Vorwärts- und Rückwärtsfahrt 2.1 vom Fahrzeugführer eingeleitet. Der Fahrzeugführer veranlasst dazu einen beabsichtigten Bremsdruck 1.2. Beim Lösen des Fahrzeugbremsdrucks während dem Wechsel zwischen Vorwärts- und Rückwärtsfahrt wird der Bremsdruck jedoch nicht mehr auf Null herabgesetzt, sondern automatisch und vom Fahrzeugführer im Wesentlichen nicht merkbar auf einem notwendigen Niveau 3.2 gehalten. Innerhalb des negativen Beschleunigungsvorgangs bei der Rückwärtsfahrt 3.1 und des dabei automatisch eingeleiteten leichten Bremsdrucks 3.2 rutscht der Bremsbelag nach Kurvenabschnitt 3.3 langsam von einer Anlegestütze (21 oder 22 aus Figur 1) in die andere Anlegestütze des Bremssattels. Die Belagsbeschleunigung 4.4 wird dabei derart gering gehalten, dass keine Geräuschentwicklung beim Anliegen des Bremsbelags (10 in Figur 1) an den Anlegestützen beim nächsten Bremsvorgang 4.2 stattfindet.

In Figur 2b wird dieselbe Situation eines vom Fahrer beabsichtigten Bremseingriffs nach einem bereits stattgefundenem Wechsel zwischen Vorwärts- und Rückwärtsfahrt, jedoch ohne einen automatisch eingeleiteten Bremsdruck aufgezeigt. Dabei sind die gleichen Diagramm-Koordinaten aus Figur 2a gewählt, wobei jeweils der zeitliche Verlauf der Fahrzeuggeschwindigkeit (Diagramm e)), des Bremsdrucks (Diagramm f)), der Position des Bremsbelags (Diagramm g)) und der Beschleunigung des Bremsbelags (Diagramm h)) dargestellt werden.

Aus Diagramm g) ist dabei zu erkennen, dass die Position des Bremsbelags bei einem Bremseingriff 2.2 nach einem Wechsel zwischen Vorwärts- und Rückwärtsfahrt 1.1 sprungartig in diesem Falle in "rückwärts" wechselt. Dieser sprungartige Wechsel 3.2 der Position des Bremsbelags beschreibt das oben ausgeführte Phänomen des Reversierklackens, also einen schlagartigen Positionswechsel des Bremsbelags innerhalb des genannten Schachtspiels von der einen Anlegestütze zur anderen Anlegestütze. Der sprungartige Wechsel der Position des Bremsbelags und des damit verbundenen Klackergeräusches geht mit einer im Vergleich zu der Beschleunigung des Bremsbelags unter Hinzunahme der erfinderischen Maßnahme aus Diagramm d) in Figur 2a, hohen Beschleunigung 4.2 des Bremsbelags einher.

## Patentansprüche

1. Verfahren zum Betreiben eines Fahrzeug-Bremssystems, welches mindestens einen Bremsbelag (10) und einen hiermit zusammenwirkenden Reibpartner aufweist, wobei eine elektronische Steuereinheit einen Zustand am Fahrzeug erfasst und zustandsabhängig ein derartiges Andrücken zwischen Bremsbelag (10) und Reibpartner einleitet, dass im Wesentlichen keine merkbare Fahrzeugverzögerung eintritt, **dadurch gekennzeichnet, dass** die elektronische Steuereinheit als Zustand einen Wechsel zwischen Vorwärts- und Rückwärtsfahrt erfasst.

2. Verfahren nach Anspruch 1, wobei die elektronische Steuereinheit zusätzlich als Zustand eine Vertikalbewegung und/oder eine Quelle einer zukünftigen Vertikalbewegung des Fahrzeugrads und/oder eines Fahrzeugaufbaus des Fahrzeuges erfasst.

3. Verfahren nach Anspruch 1 oder 2, wobei die elektronische Steuereinheit den Wechsel zwischen Vorwärts- und Rückwärtsfahrt mittels eines Raddrehzahlsensors oder/und mittels eines Sensors zur Erkennung des eingelegten Fahrzeuggetriebeganges erfasst.

4. Verfahren nach Anspruch 2, wobei die elektronische Steuereinheit die Vertikalbewegung mittels eines Höhenstandsensors und/oder an einem Beschleunigungssensor erfasst.

5. Verfahren nach einem der vorangegangenen Ansprüche, wobei die elektronische Steuereinheit die Quelle einer zukünftigen Vertikalbewegung mittels einer Kamera und/oder eines Fahrzeug-Navigationssystems erfasst.

6. Verfahren nach einem der vorangegangenen Ansprüche, wobei das Aneinanderdrücken zwischen Bremsbelag (10) und Reibpartner mit einem geringen Bremsdruck in der Größenordnung von nicht mehr als 5 bar erfolgt.

7. Verfahren nach einem der vorangegangenen Ansprüche, wobei der Bremsdruck für das Aneinanderdrücken zwischen Bremsbelag (10) und Reibpartner auf einen Maximalwert voreingestellt ist.

8. Verfahren nach einem der vorangegangen Ansprüche, wobei das Einleiten und/oder ein Beenden der im Wesentlichen nicht merkbaren Fahrzeugverzögerung von der Steuereinheit mittels einer Sprungfunktion erfolgen.

9. Verfahren nach einem der vorangegangen Ansprüche, wobei das Einleiten und/oder das Beenden der im Wesentlichen nicht merkbaren Fahrzeugverzögerung kennfeldgesteuert in Abhängigkeit der Zeit und/ oder der Geschwindigkeit und/oder dem zurückgelegten Weg des Fahrzeuges erfolgen.

10. Verfahren nach einem der vorangegangenen Ansprüche, wobei die Dauer des Einwirkens des Bremsdrucks von der Fahrzeuggeschwindigkeit und/oder dem vom Fahrzeug zurückgelegtem Weg und/oder von der Zeit abhängig ist.

11. Verfahren nach einem der vorangegangenen Ansprüche, wobei im Falle eines konventionellen hydraulischen Fahrzeug-Bremssystems nach vom Fahrer durchgeführten Gangwechsel und daraufhin folgendem Loslassen des Bremspedals durch den Fahrer, der an die Bremsbeläge angelegte Bremsdruck nicht vollständig zurückgenommen wird.

12. Vorrichtung mit einer elektronischen Steuereinheit zur Durchführung des Verfahrens nach einem der vorangegangenen Ansprüche.

13. Verwendung des Verfahrens nach einem der Ansprüche 1 - 11 zur Verminderung von Geräuschen.

## Claims

1. Method for operating a vehicle brake system which has at least one brake pad (10) and a friction partner that interacts therewith, wherein an electronic control unit detects a state on the vehicle and, in a manner dependent on the state, initiates a pressing action between brake pad (10) and friction partner such that substantially no perceptible vehicle deceleration occurs, **characterized in that** the electronic control unit detects, as a state, a change between forward and reverse travel.

2. Method according to Claim 1, wherein the electronic control unit additionally detects, as a state, a vertical movement and/or a source of a future vertical movement of the vehicle wheel and/or of a vehicle body of the vehicle.

3. Method according to Claim 1 or 2, wherein the electronic control unit detects the change between forward and reverse travel by means of a wheel rotational speed sensor and/or by means of a sensor for identifying the engaged vehicle transmission gear ratio.

4. Method according to Claim 2, wherein the electronic control unit detects the vertical movement by means of a ride height sensor and/or at an acceleration sensor.

5. Method according to any of the preceding claims, wherein the electronic control unit detects the source of a future vertical movement by means of a camera and/or a vehicle navigation system.

6. Method according to any of the preceding claims, wherein the pressing-together of brake pad (10) and friction partner is performed with a low brake pressure of the order of no more than 5 bar.

7. Method according to any of the preceding claims, wherein the brake pressure for the pressing-together of brake pad (10) and friction partner is preset to a maximum value.

8. Method according to any of the preceding claims, wherein the initiation and/or an ending of the substantially imperceptible vehicle deceleration are performed by the control unit by means of a step function.

9. Method according to any of the preceding claims, wherein the initiation and/or the ending of the substantially imperceptible vehicle deceleration are performed in characteristic-map-controlled fashion in a manner dependent on the time and/or the speed of and/or the distance travelled by the vehicle.

10. Method according to any of the preceding claims, wherein the duration of the action of the brake pressure is dependent on the vehicle speed and/or on the distance travelled by the vehicle and/or on the time.

11. Method according to any of the preceding claims, wherein, in the case of a conventional hydraulic vehicle brake system, after gear ratio changes performed by the driver and subsequent release of the brake pedal by the driver, the brake pressure applied to the brake pads is not fully withdrawn.

12. Device having an electronic control unit for carrying out the method according to any of the preceding claims.

13. Use of the method according to any of Claims 1 - 11 for reducing noises.

## Revendications

1. Procédé permettant de faire fonctionner un système de freinage de véhicule qui présente au moins une garniture de frein (10) et un partenaire de friction coopérant avec celle-ci, une unité de commande électronique détectant un état sur le véhicule et déclenchant en fonction de l'état un placage entre la garniture de friction (10) et le partenaire de friction tel que substantiellement aucune décélération de véhicule perceptible ne survient, **caractérisé en ce que** l'unité de commande électronique détecte comme état un changement entre marche avant et marche arrière.

2. Procédé selon la revendication 1, dans lequel l'unité de commande électronique détecte en plus comme état un mouvement vertical et/ou une source d'un mouvement vertical futur de la roue de véhicule et/ou d'une carrosserie du véhicule.

3. Procédé selon la revendication 1 ou 2, dans lequel l'unité de commande électronique détecte le changement entre marche avant et marche arrière au moyen d'un capteur de vitesse de rotation de roue ou/et au moyen d'un capteur pour reconnaître la vitesse de transmission de véhicule enclenchée.

4. Procédé selon la revendication 2, dans lequel l'unité de commande électronique détecte le mouvement vertical au moyen d'un capteur de hauteur de châssis et/ou au niveau d'un capteur d'accélération.

5. Procédé selon l'une quelconque des revendications précédentes, dans lequel l'unité de commande électronique détecte la source d'un mouvement vertical futur au moyen d'une caméra et/ou d'un système de navigation de véhicule.

6. Procédé selon l'une quelconque des revendications précédentes, dans lequel le serrage mutuel entre la garniture de frein (10) et le partenaire de friction est effectué à une faible pression de freinage d'un ordre de grandeur ne dépassant pas les 5 bars.

7. Procédé selon l'une quelconque des revendications précédentes, dans lequel la pression de freinage pour le serrage mutuel entre la garniture de frein (10) et le partenaire de friction est préréglée sur une valeur maximale.

8. Procédé selon l'une quelconque des revendications précédentes, dans lequel le début et/ou la fin de la décélération substantiellement imperceptible du véhicule sont effectués par l'unité de commande au moyen d'une fonction de saut.

9. Procédé selon l'une quelconque des revendications précédentes, dans lequel le début et/ou la fin de la décélération substantiellement imperceptible du véhicule sont effectués de manière commandée par champ caractéristique en fonction du temps et/ou de la vitesse et/ou de la distance parcourue par le véhicule.

10. Procédé selon l'une quelconque des revendications précédentes, dans lequel la durée de l'effet de la pression de freinage dépend de la vitesse de véhicule et/ou de la distance parcourue par le véhicule et/ou du temps.

11. Procédé selon l'une quelconque des revendications précédentes, dans lequel, dans le cas d'un système de freinage de véhicule hydraulique conventionnel, après un changement de vitesse effectué par le conducteur et un relâchement consécutif de la pédale de frein par le conducteur, la pression de frein appliquée aux garnitures de frein n'est pas complètement retirée.

12. Dispositif comprenant une unité de commande électronique pour effectuer le procédé selon l'une quelconque des revendications précédentes.

13. Utilisation du procédé selon l'une quelconque des revendications précédentes 1 à 11 pour réduire le bruit.
